Europäisches Patentamt

European Patent Office

Office européen des brevets

(11) Veröffentlichungsnummer: **0 303 005**

**A1**

(12) **EUROPÄISCHE PATENTANMELDUNG**

(21) Anmeldenummer: **88107707.7**

(22) Anmeldetag: **13.05.88**

(51) Int. Cl.⁴: **B01D 53/36 , B01J 23/74**

(30) Priorität: **14.08.87 DE 3727118**

(43) Veröffentlichungstag der Anmeldung:
**15.02.89 Patentblatt 89/07**

(84) Benannte Vertragsstaaten:
**AT BE CH DE ES FR GB GR IT LI LU NL SE**

(71) Anmelder: **DIDIER-WERKE AG**
**Lessingstrasse 16-18**
**D-6200 Wiesbaden(DE)**

Anmelder: **DIDIER ENGINEERING GmbH**
**Alfredstrasse 28 Postfach 10 09 45**
**D-4300 Essen 1(DE)**

(72) Erfinder: **Grimm, Daniel**
**Reitallee 18**
**D-6208 Bad Schwalbach(DE)**
Erfinder: **Kainer, Hartmut, Dr.**
**Am Güldenplan 2G**
**D-6200 Wiesbaden(DE)**
Erfinder: **Kleinevoss, Albert, Dr.**
**Emserstrasse 36**
**D-5410 Höhr-Grenzhausen(DE)**
Erfinder: **Laue, Karl-Heinrich**
**Bergische Strasse 41**
**D-4320 Hattingen 16(DE)**
Erfinder: **Flockenhaus, Claus, Prof. Dr.**
**Tersteegenweg 16**
**D-4300 Essen 1(DE)**
Erfinder: **Merkel, Klaus**
**Schönscheidtstrasse 8**
**D-4300 Essen 13(DE)**

(74) Vertreter: **Brückner, Raimund, Dipl.-Ing.**
**c/o Didier-Werke AG Lessingstrasse 16-18**
**D-6200 Wiesbaden(DE)**

(54) **Verfahren zur Herstellung von Katalysatoren für die Reduzierung von Stickoxiden aus Abgasen oder für chemische Luftreinigungsverfahren und nach dem Verfahren hergestellte Katalysatoren.**

(57) Die Erfindung betrifft ein Verfahren zur Herstellung von Katalysatoren für die Reduzierung von Stickoxiden in Abgasen oder für chemische Luftreinigungsverfahren, bei welchem man aus Eisenoxid oder Gemischen aus Eisenoxid und Chromoxid und/oder Manganoxid, die auf Korngrößen < 2 mm zerkleinert sind, unter Verwendung von anorganischen Bindemitteln und Schwefelsäure sowie gegebenenfalls aktivierenden Zusätzen Katalysatorformkörper herstellt.
Gemäß der Erfindung wird
a) entweder die Mischung der festen Ausgangsmaterialien mit Schwefelsäure, einer Mischung aus Schwefelsäure und Phosphorsäure oder einer Sulfate, Hydrogensulfate, Phosphate oder Hydrogenphosphate von Ammonium, Aluminium, Eisen, Vanadium, Mangan, Molybdän, Chrom, Kupfer, Kobalt enthaltenden Schwefelsäure oder Mischung aus Schwefelsäure und Phosphorsäure versetzt und hieraus Formkörper

formt die Mischung der festen Ausgangsmaterialien unter Zusatz von Flüssigkeit und/oder Phosphorsäure und/oder Phosphaten zu Formkörpern formt und diese mit Schwefelsäure oder eine Sulfate oder Hydrogensulfate von Ammonium, Aluminium, Eisen, Vanadium, Mangan, Molybdän, Chrom, Kupfer, Kobalt enthaltenden Schwefelsäure behandelt, und

b) abschließend an den in Stufe a) erhaltenen Formkörper eine Trocknungsbehandlung bei 110° bis 250° C und eine Trocknungsbehandlung bei 250° bis 600° C durchführt.

Die nach dem erfindungsgemäßen Verfahren hergestellten Katalysatoren besitzen eine geringe Feuchtigkeitsempfindlichkeit und gute Aktivität.

## Verfahren zur Herstellung von Katalysatoren für die Reduzierung von Stickoxiden aus Abgasen oder für chemische Luftreinigungsverfahren und nach dem Verfahren hergestellte Katalysatoren

Die Erfindung betrifft ein Verfahren zur Herstellung von Katalysatoren für die Reduzierung von Stickoxiden in Abgasen oder für chemische Luftreinigungsverfahren, bei welchem man aus Eisenoxid oder Gemischen aus Eisenoxid und Chromoxid und/oder Manganoxid, die auf Korngrößen < 2 mm zerkleinert sind, unter Verwendung von anorganischen Bindemitteln und Schwefelsäure sowie gegebenenfalls aktivierenden Zusätzen Katalysatorformkörper herstellt, sowie nach dem Verfahren hergestellte Katalysatoren.

Es sind bereits Verfahren zur Herstellung von Katalysatoren für die Reduzierung von Stickoxiden aus Abgasen oder für chemische Luftreinigungsverfahren bekannt, wobei bei der Reduzierung von Stickoxiden aus Abgasen diesen Abgasen $NH_3$ für die chemische Reaktion der Stickoxide mit dem Ammoniak unter Bildung von Stickstoff zugesetzt wird.

Aus der DE-OS 35 31 651.9-41 sind bereits Katalysatoren für die Stickoxidreduzierung in Abgasen bekannt, welche als Hauptbestandteil ein körniges $Fe_2O_3$-Katalysatormaterial und ein Bindemittel enthalten, wobei dieses Bindemittel in einer ersten Mischung mit dem $Fe_2O_3$ Phosphorsäure und in einer zweiten Mischung mit $Fe_2O_3$ Schwefelsäure ist. Diese beiden Mischungen werden miteinander vermischt und hieraus Katalysatorplatten hergestellt. Ein Verfahren zur Herstellung ähnlicher Katalysatoren ist aus der DE-OS 35 05 648.7-41 bekannt, bei welchem Eisenoxid und Chromoxid sowie aktivierende Zusätze trocken vermischt werden, dieses trockene Gemisch mit Phosphorsäure gebunden und anschließend mit Schwefelsäure getränkt wird, woran sich eine Kalzinierung bzw. Temperbehandlung und die anschließende Herstellung der Formkörper anschließen. Aus der DE-PS 35 26 383 ist ein Verfahren zur Erzeugung von Katalysatoren für die Stickoxidreduzierung aus Abgasen bekannt, bei welchem ein katalytisch aktives Oxidgemisch aus Eisen- oder Chromerz und Verflüssiger mit Wasser und Schwefelsäure zu einem Schlicker aufbereitet wird, der auf einen mit einer ätzenden Säure vorbehandelten metallischen Träger aufgebracht wird.

Weiterhin ist aus der Patentanmeldung P 35 44 913.6 ein Verfahren zur Herstellung von Katalysatorformkörpern aus Eisen-, Chrom-, oder dergleichen Erzen unter Verwendung eines Bindemittels bekannt, wobei die körnigen Ausgangserze zunächst einer thermischen Vorbehandlung bei Temperaturen von etwa 250 bis 1000° C unterzogen werden, bevor sie mit verdünnter und/oder konzentrierter Schwefelsäure als Bindemittel vermischt und zu Katalysatorformkörpern weiterverarbeitet werden.

Aufgabe der vorliegenden Erfindung ist die Bereitstellung eines Verfahrens zur Herstellung von Katalysatoren der zuvorgenannten Art, bei welchem Katalysatoren erhalten werden, welche eine gute Feuchtigkeitsbeständigkeit bei guter Aktivität besitzen. Das Problem der Feuchtigkeitsbeständigkeit bei Katalysatoren zur Entfernung von Stickoxiden aus Abgasen ist an sich bekannt, da beim Betrieb solcher Katalysatoren bei absinkenden Temperaturen im Abgas der Taupunkt unterschritten werden kann, wodurch sich Feuchtigkeit auf den Katalysatorformkörper niederschlägt und diese zerstören kann bzw. Katalysatorformkörper werden durch den Feuchtigkeitseinfluß unzulässig verformt.

Überraschenderweise wurde nun gefunden, daß bei der Herstellung solcher Katalysatoren zur Reduzierung von Stickoxiden in Abgasen und für chemische Luftreinigungsverfahren, welche in üblicher Weise aus Eisenoxid oder Mischungen aus Eisenoxid und Chromoxid und/oder Manganoxid und gegebenenfalls an sich bekannten aktivierenden Zusätzen hergestellt werden, eine ausgezeichnete Feuchtigkeitsbeständigkeit, d.h. Wasserfestigkeit und eine gute Aktivität erzielt werden kann, wenn entweder die Mischung der festen Ausgangsmaterialien mit der Säure, dem Säuregemisch oder einem Sulfat oder Phosphate enthaltenden Säuregemisch behandelt wird und dann die Formkörper geformt werden, oder die Formkörper nur unter Verwendung der anorganischen und gegebenenfalls vorliegenden organischen Bindemittel und Phosphorsäure und/oder Phosphaten zu Katalysatorformkörpern verformt werden und dann die Formkörper mit Schwefelsäure oder einer Sulfate oder Hydrogensulfate von Ammonium oder Metallen, welche in Schwefelsäure oder verdünnter Schwefelsäure löslich sind, enthaltenden Lösung behandelt werden und abschließend an den erhaltenen Formkörpern eine Trocknungsbehandlung und dann eine Temperbehandlung durchgeführt wird.

Die gute Feuchtigkeitsbeständigkeit wird durch das Einbringen von Phosphaten, entweder über die zugesetzte Phosphorsäure und Bildung von Phosphaten, oder durch direkte Zugabe von Phosphaten oder von Phosphorsäure und Phosphaten in die Mischung vor der Formgebung entweder bei gleichzeitigem Einbringen von Schwefelsäure und/oder Sulfaten oder anschließendes Tränken der Formkörper in Schwefelsäure und/oder Sulfatlösungen erzielt. Der Begriff Phosphate bzw. Sulfate umfaßt hier auch die Hydrogenphosphate bzw. Hydrogensulfate.

Zur Lösung der zuvor genannten Aufgabe dient daher das Verfahren, wie es im Kennzeichen des Patentanspruches 1 näher beschrieben ist.

Gemäß einer bevorzugten Ausführungsform werden 10 bis 100 Gew.-% des Eisenoxids oder des Gemisches aus Eisenoxid und Chromoxid und/oder Manganoxid mit einer Korngröße unterhalb 0,09 mm verwendet. Hierdurch werden besonders aktive Katalysatoren erhalten.

Gemäß einer weiteren bevorzugten Ausführungsform werden die aktivierenden Zusätze ebenfalls mit einer Korngröße unterhalb 0.09 mm verwendet, wodurch ebenfalls die Aktivität der erhaltenen Katalysatoren erhöht wird.

Gemäß einer bevorzugten Ausführungsform wird anstelle des anorganischen Bindemittels oder zusammen mit dem anorganischen Bindemittel ein organisches Bindemittel verwendet, wobei es sich hier vorzugsweise um Pulverharze, Schmelzkleber, Sinterpulver oder Phenol-Formaldehydharze oder um modifizierte Furfurylalkoholharze, Furanharze, Phenolharze, z.B. Phenolnovolake, handeln.

Vorzugsweise werden als anorganische Bindemittel Ton, Kaolin und/oder Al-haltige Verbindungen, wie Aluminiumhydroxid oder Aluminiumoxychlorid oder magnesium-oder calciumhaltige Verbindungen, wie Zemente, z.B. Sorel-Zemente, Calciumsilikat- oder Calciumaluminat-Zemente, gegebenenfalls mit feinkörnigem $SiO_2$, verwendet.

Gemäß einer weiteren bevorzugten Ausführungsform wird ein Ton mit einem Gehalt von größer als 30 Gew.-% Illit verwendet.

Gemäß einer weiteren bevorzugten Ausführungsform werden 20 bis 70 Gew.-% des Eisenoxids oder des Gemisches aus Eisenoxid und Chromoxid und/oder Manganoxid mit einer Korngröße unterhalb 0,09 mm eingesetzt.

Gemäß einer weiteren bevorzugten Ausführungsform werden die Oxide von Fe, Cr und/oder Mn, die gegebenenfalls zuzusetzenden, aktivierenden Zusätze und gegebenenfalls die zuzusetzenden, festen Bindemittel vor dem Vermischen mit den übrigen Bestandteilen der Mischung homogen miteinander vermischt. Hierdurch wird eine höhere Aktivität der hergestellten Katalysatorformkörper erreicht.

Gemäß einer weiteren bevorzugten Ausführungsform werden die aktivierenden Zusätze mit einer maximalen Korngröße von 0,02 mm verwendet.

Bei der gleichzeitigen Verwendung von Schwefelsäure und Phosphorsäure zur Herstellung der Katalysatorformkörper können bei der ersten Ausführungsform, bei welcher die Säuren in die Ausgangsmischung eingemischt und dann die Formkörper hergestellt werden, auch Salze in Form von Sulfaten, Hydrogensulfaten, Phosphaten und Hydrogenphosphaten von Metallen oder Ammonium, welche in der Säure bzw. der Säurelösung löslich sind, eingesetzt werden. Bei der zweiten Ausführungsform, bei welcher die Katalysatorformkörper nach ihrer Formung mit Schwefelsäure behandelt werden, können zusammen mit der Schwefelsäure auch Sulfate oder Hydrogensulfate der zuvor genannten Art verwendet werden, wobei diese in der Schwefelsäure bzw. der verdünnten Schwefelsäure ebenfalls löslich sein sollen.

Bei gemeinsamer Verwendung von Schwefelsäure und Phosphorsäure und deren Salze liegt das Gewichtsverhältnis von Sulfat zu Phosphat bzw. Hydrogensulfat zu Hydrogenphosphaten im Bereich von 100 : 1 bis 1 : 100 und vorzugsweise im Bereich von 10 : 1 bis 1 : 10.

Bei dem erfindungsgemäßen Verfahren ist es wesentlich, daß man nach dem Trocknen der Formkörper eine Temperbehandlung im Bereich zwischen 250°C bis 600°C durchführt, wobei die angegebenen Temperaturen die Maximaltemperaturen der Temperbehandlung sind. Vorzugsweise liegt die Maximaltemperatur im Bereich zwischen 350°C und 450°.

Die Aufheizgeschwindigkeit bei dieser Temperbehandlung ist von einem gewissen Einfluß und sollte vorteilhafterweise zwischen 5°C/h und 200°C/h gehalten werden.

Gemäß einer weiteren bevorzugten Ausführungsform erfolgt an den Formkörper nach ihrer Herstellung und Trocknung und/oder Aushärtung bei der Ausführungsform, bei welcher eine Behandlung mit Säure nach der Formung durchgeführt wird, eine vorherige Behandlung mit einer Lösung von Aluminiumhydroxidchlorid und eine erneute Trocknung vor dieser Säurebehandlung.

Bei dem erfindungsgemäßen Verfahren werden als Hauptbestandteile des Katalysators Eisenoxid oder Mischungen aus Eisenoxid und Chromoxid und/oder Manganoxid verwendet. Unter dem Ausdruck Eisenoxid und Chromoxid und Manganoxid sind hier auch Eisenerze, Chromerze bzw. Manganerze mit hohen Gehalten an $Fe_2O_3$ bzw. $Fe_3O_4$ und $Cr_2O_3$ und Manganoxiden zu verstehen. Es müssen daher nicht die reinen Oxide verwendet werden. Die Oxide bzw. Erze werden üblicherweise in geeignet zerkleinerter Form eingesetzt, z.B. Korngrößen < 2 mm. Bei dem erfindungsgemäßen Verfahren werden dem Eisenoxid bzw. der Mischung aus Eisenoxid und Chromoxid und/oder Manganoxid vorteilhafterweise aktivierende Zusätze zudotiert. Bei diesen Zusätzen kann es sich um an sich bekannte Dotierungen handeln, die entweder in Form der Elemente, der Oxide oder anderer geeigneter Salze eingesetzt werden. Beispiele für solche dotierenden Elemente sind Vanadium, Kupfer, Kobalt, Uran, Wolfram, Nickel, Molybdän, Mangan, Zinn, Zink, Beryllium, Bor, Yttrium, Niob, Antimon, Zirkon, Wismuth, Silber sowie Elemente der seltenen Erden in Form von Oxiden oder Hydroxiden. Bei den erfindungsgemäßen Katalysatoren können ebenfalls Oxide oder Hydroxide des Magnesiums, Aluminiums und Siliziums entweder in den Ausgangsmaterialien als Verunreinigungen vorliegen oder auch absichtlich zugesetzt werden.

Bei dem erfindungsgemäßen Verfahren können anorganische und/oder organische Bindemittel zur Herstellung der Katalysatorformkörper verwendet werden. Beispiele für solche anorganischen Bindemittel sind Tone, insbesondere Bindetone, Kaoline, Al-haltige Verbindungen, wie Aluminiumhydroxid und Aluminiumhydroxychlorid oder Gemische dieser Verbindungen.

Als organische Bindemittel können bei dem erfindungsgemäßen Verfahren die organischen Bindemittel verwendet werden, die auf dem Feuerfestgebiet an sich bekannt sind. Beispiele für solche organischen Bindemittel sind Zelluloseether, Phenolharze, z.B. Phenolnovolake, wobei hier geeignete Härter, z.B. Hexamethylentetramin, verwendet werden können, sowie modifizierte Furanharze, z.B. Furfurylalkoholharze, die ebenfalls mit einem geeigneten Härter, z.B. Hexamethylentetramin, eingesetzt werden.

Neben den anorganischen und/oder organischen Bindemitteln können wahlweise auch noch andere Zusatzstoffe zu dem Ausgangsgemisch für die Herstellung der Katalysatorformkörper zugesetzt werden, welche ebenfalls eine Bindemittelwirkung ausüben können oder bei der späteren Behandlung mit den Säuren reagieren und Sulfate oder Phosphate bilden, die die Festigkeit der letztlich erhaltenen Katalysatoren wesentlich erhöhen. Beispiele für solche Zusatzstoffe sind: Olivin, Talkum, Metallhydroxide oder Carbonate oder Hydrogencarbonate, z.B. von Mg, Al, Fe, Ca und feinteiliges $SiO_2$.

Die Verfahrensschritte zur Herstellung eines erfindungsgemäßen Katalysators sind an sich bekannt. Hierzu werden die Ausgangsmaterialien zusammen mit den gegebenenfalls eingesetzten aktivierenden Zusätzen und dem Bindemittel sowie gegebenenfalls einer geringen Menge einer Flüssigkeit entweder Wasser oder einem organischen Lösungsmittel, wie einem Alkohol, zu einer homogenen Mischung in einem geeigneten Mischer vermischt und hieraus die gewünschten Formkörper gepreßt, wobei diese Formkörper sowohl mit einer Stempelpresse gepreßt, isostatisch gepreßt, stranggepreßt oder ausgewalzt werden können, oder auch Formkörper gegossen werden können.

Bei der ersten Ausführungsform der Erfinding besteht die zuzusetzende Flüssigkeit aus der Schwefelsäure, Phosphorsäure, dem Säuregemisch bzw. dem Sulfat-Phosphat-Säure-Gemisch.

Anschließend werden diese grünen Formkörper zur beschleunigten Härtung der Bindung entweder nur getrocknet, z.B. im Fall der alleinigen Verwendung von anorganischen Bindemitteln, oder sie werden einer für die Aushärtung bei Verwendung von organischen Bindemitteln ausreichenden Temperatur für die erforderliche Zeitspanne ausgesetzt. Die Trocknung bei Verwendung von anorganischen Bindemitteln erfolgt üblicherweise im Bereich zwischen 100 und 150° C, während bei alleiniger Verwendung oder Mitverwendung von organischen Bindemitteln die Temperatur üblicherweise im Bereich zwischen 150° C und 250° C liegt.

Bei der zweiten Ausführungsform der Erfindung werden nach der Trocknung bzw. Aushärtung der Formkörper diese der Behandlung mit Schwefelsäure oder der Sulfat oder Hydrogensulfate enthaltenden Schwefelsäure unterzogen. Diese Behandlung kann eine Tränkbehandlung sein, d.h. die Formkörper werden in die Säuremischung oder in die einzelnen Säuren nacheinander eingetaucht, oder die Säuremischung oder die einzelnen Säuren können auch auf die Formkörper aufgesprüht oder aufgestrichen werden. Falls die Formkörper getränkt werden, beträgt die Tränkzeit im allgemeinen zwischen 3 und 100 Sekunden, was von den Abmessungen, insbesondere der Wandstärke der Formkörper abhängig ist.

Anschließend werden die mit der Schwefelsäure bzw. der Sulfate oder Hydrogensulfate enthaltenden Schwefelsäure behandelten Formkörper getrocknet, üblicherweise während 1 bis 4 Stunden bei einer Temperatur zwischen 110 und 250° C, und nach Abschluß der Trocknung, d.h. der Entfernung flüchtiger Bestandteile, erfolgt die Temperbehandlung der Formkörper, wobei die Temperatursteigerungsrate 10° C/h bis 200° C/h beträgt. Die Formkörper werden üblicherweise während einer gewissen Zeit zwischen 2 und 10 Stunden auf der Maximaltemperatur der Temperbehandlung gehalten. Anschließend werden die Formkörper abkühlen gelassen und sind dann einsatzfertig. Vorzugsweise erfolgt das Tempern in einer Atmosphäre mit reduziertem $O_2$-Gehalt, z.B. 0,5 - 10 % $O_2$, vorzugsweise 2 - 4 % $O_2$.

Die Erfindung wird anhand der folgenden Beispiele näher erläutert, wobei die Beispiele 1 bis 17 sich auf die erste Ausführungsform der Erfinding beziehen, während die Beispiele 18 bis 33 sich auf die zweite Ausführungsform der Erfinding beziehen.


Beispiel 1

1,95 kg Eisenerz mit 95 % $Fe_2O_3$, Rest $SiO_2$, $Fe_2O_3$, $Al_2O_3$, einer Rohdichte von 3,6 g/cm³ und einer Gesamtporosität von > 15 Vol.-% mit einer Korngröße von 0,09 - 1,0 mm und 0,6 kg desselben Eisenerzes mit einer Körnung von 0 - 0,09 mm sowie 0,3 kg Chromerz mit einem Gehalt von 50 % $Cr_2O_3$, Rest MgO,

Fe$_2$O$_3$, SiO$_2$, Al$_2$O$_3$, wurden homogen in einem Turbulenzmischer mit 0,15 kg Bindeton vermischt. Darin wurden unter weiterem Mischen 80 ml 65 %ige Schwefelsäure eingesprüht und homogen vermischt. Aus dieser Masse wurden Formkörper mit den Abmessungen von 150 x 150 x 2,4 mm unter einem Druck von 40 N/mm$^2$ gepreßt. Diese Formkörper wurden anschließend 2 h bei 200°C getrocknet und mit einer Aufheizgeschwindigkeit von 50°C/h auf 450°C aufgeheizt. Sie wurden 5 h bei 450°C gehalten und dann abkühlen gelassen.

Beispiel 2

Die Arbeitsweise von Beispiel 1 wurde wiederholt, wobei hier jedoch zunächst das Eisenerz mit einer Korngröße zwischen 0 - 0,09 mm, der Bindeton sowie 0,15 kg zusätzlich eingesetztes Vanadinpentoxid in einer Kugelschwingmühle intensiv vermischt wurden. Diese Vormischung wurde dann mit den übrigen Feststoffen im Turbulenzmischer vermischt, anschließend die Schwefelsäure zugesetzt und die Formkörper entsprechend der Arbeitsweise von Beispiel 1 hergestellt.

Beispiel 3

0,75 kg des in Beispiel 1 verwendeten Eisenerzes mit einer Körnung von 0,09 - 0,2 mm sowie 2,1 kg desselben Eisenerzes mit einer Körnung von 0 - 0,09 mm , 0,09 kg Bindeton und 0,12 kg Talkum werden 0,15 kg Vanadiumpentoxid und 0,09 kg eines Celluloseethers, der als organisches Bindemittel und als Plastifizierungsmittel diente, in einem Knetmischer mit 40 ml 70 %iger Phosphorsäure und 80 ml 65 %iger Schwefelsäure sowie 350 ml Wasser homogen zu einer plastischen Masse vermischt. Diese Masse wurde einmal zu Platten von 150 x 150 x 2,4 mm ausgewalzt bzw. durch Strangpressen Formkörper mit wabenförmigem Querschnitt und den Abmessungen 50 x 50 x 500 mm hergestellt. Diese Formkörper wurden 24 h an Luft und anschließend 24 h bei 110°C getrocknet und dann mit einer Aufheizgeschwindigkeit von 20°C/h auf 450°C aufgeheizt, 5 h auf 450°C gehalten und dann abgekühlt.

Beispiele 4 bis 17

Es wurden die Ausgangsmischungen der Feststoffe entsprechend den Beispielen 1 bis 3 verwendet, wobei folgende Säuremischungen bzw. Säure-Sulfat-Phosphatmischungen eingesetzt wurden:

Tabelle

| Bsp.1 | Feststoff-Ausgangsmischung | | |
|---|---|---|---|
| 4 | 1 | Mischung aus | 25 % Schwefelsäure 95 %ig<br>25 % Phosphorsäure 70 %ig<br>50 % Wasser |
| 5 | 2 | Mischung aus | 25 % Schwefelsäure 95 %ig<br>25 % Monoaluminiumpohsphat 50 %ig<br>50 % Wasser |
| 6 | 3 | Mischung aus | 25 % Schwefelsäure 95 %ig<br>5 % Phosphorsäure 70 %ig<br>20 % Monochromatphosphatlösung<br>50 % Wasser |
| 7 | 1 | Mischung aus | 50 % Schwefelsäure 95 %ig<br>50 % Wasser + 2,0 % Ammoniumhydrogenphosphat |
| 8 | 2 | Mischung aus | 25 % Schwefelsäure 95 %ig<br>25 % Phosphorsäure 70 %ig<br>50 % Wasser + 1,0 % Aluminiumhydroxid |
| 9 | 3 | Mischung von Bsp. 4 + 4,0 % Eisen(II)-sulfat-heptahydrat | |
| 10 | 1 | Mischung von Bsp. 4 + 4,0 % Eisen(III)-sulfat | |
| 11 | 1 | Mischung von Bsp. 4 + 5,0 % Vanadium(IV) oxysulfat-pentahydrat | |
| 12 | 1 | Mischung von Bsp. 4 + 0,1 % Nickeloxid | |
| 13 | 1 | Mischung von Bsp. 4 + 0,1 % Molybdän(VI)-oxid | |
| 14 | 2 | Mischung von Bsp. 4 + 4,0 % Aluminiumsulfathydrat | |
| 15 | 1 | Mischung von Bsp. 4 + 0,5 % Mangan(II)-sulfat-mono-hydrat | |
| 16 | 1 | Mischung von Bsp. 4 + 1,0 % Eisenpulver | |
| Beispiel 17 | | | |
| Feststoffausgangsmischung | | Mischung aus | 70 % Phosphorsäure 85 %ig |
| | | | 30 % Wasser + 4,0 % Eisen(II)-sulfat-heptahydrat + 4,0 % Aluminiumsulfathydrat |

EP 0 303 005 A1

Beispiel 18

1,95 kg Eisenerz mit 95 % $Fe_2O_3$, Rest $SiO_2$, FeO, $Al_2O_3$, einer Rohdichte von 3,6 g/cm³ und einer Gesamtporosität von > 15 Vol.-% mit einer Korngröße von 0,09 - 1,0 mm und 0,6 kg desselben Eisenerzes mit einer Körnung von 0 - 0,09 mm sowie 0,3 kg Chromerz mit einem Gehalt von 50 % $Cr_2O_3$, Rest MgO, $Fe_2O_3$, $SiO_2$, $Al_2O_3$, wurden homogen in einem Turbulenzmischer mit 0,15 kg Bindeton und 0,06 kg Aluminiumhydroxid vermischt. Dann wurden 0,3 kg eines modifizierten Furanharzes in Furfurylalkohol und 18 g Hexamethylentetramin zugesetzt und homogen eingearbeitet. Aus dieser Mischung wurden Formkörper mit den Abmessungen von 150 x 150 x 2,4 mm unter einem Druck von 40 N/mm² gepreßt. Zur Trocknung und zur Aushärtung der Bindung wurden die Formkörper auf eine Temperatur von 180°C während 0,5 h erwärmt.

Beispiel 19

1,95 kg des in Beispiel 18 verwendeten Eisenerzes mit einer Körnung von 0,09 - 1,0 mm und 0,9 kg desselben Eisenerzes mit einer Körnung von 0 - 0,09 mm, 0,15 kg des in Beispiel 1 verwendeten Bindetons sowie 0,06 kg Olivin-Mehl und 0,06 kg eines pulverförmigen Phenol-Novolakes mit 9 % Hexamethylentetramin wurden in einem Mischer gründlich vermischt. Anschließend wurden 80 ml Wasser eingearbeitet. Es wurden Formkörper mit den in Beispiel 18 angegebenen Abmessungen unter denselben Bedingungen durch Pressen hergestellt, diese wurden unter den in Beispiel 18 angegebenen Bedingungen getrocknet und ausgehärtet.

Beispiel 20

1,95 kg des in Beispiel 18 verwendeten Eisenerzes mit einer Körnung von 0,09 - 1,0 mm und 0,9 kg desselben Eisenerzes mit einer Körnung von 0 - 0,09 mm, 0,15 kg des in Beispiel 1 verwendeten Bindetons, 0,03 kg eines $SiO_2$-Sols und 0,06 kg eines pulverförmigen Phenol-Novolakes mit 9 % Hexamethylentetramin wurden in einem Mischer gründlich vermischt. Anschließend wurden 80 ml einer 10 %igen Monoaluminiumphosphatlösung eingearbeitet. Es wurden Formkörper mit den in Beispiel 18 angegebenen Abmessungen unter denselben Bedingungen durch Pressen hergestellt, diese wurden unter den in Beispiel 18 angegebenen Bedingungen getrocknet und ausgehärtet.

Beispiel 21

Die Arbeitsweise von Beispiel 18 wurde wiederholt, wobei das Eisenerz mit der Körnung von 0 - 0,09 mm zuvor mit 0,15 kg Vanadiumpentoxid in einer Kugelschwingmühle intensiv vermischt worden war. Dieses mit Vanadinpentoxid behandelte Eisenerz wurde dann bei der Herstellung der Katalysatorformkörper eingesetzt.

Beispiel 22

Die Arbeitsweise von Beispiel 20 wurde wiederholt, wobei das Eisenerz mit einer Körnung von 0 - 0,09 mm und der Bindeton zuvor mit 0,15 kg Nioboxid in einer Kugelschwingmühle intensiv vermischt worden waren. Diese Vormischung wurde dann bei der Herstellung der Katalysatorformkörper eingesetzt.

Beispiel 23

1,95 kg des in Beispiel 18 verwendeten Eisenerzes mit einer Körnung von 0,09 - 1,0 mm und 0,9 kg desselben Eisenerzes mit einer Körnung von 0 - 0,09 mm, 0,15 kg Bindeton und 0,03 kg MgO wurden in einem Mischer homogen vermischt. Anschließend wurden in den Mischer 80 ml Wasser eingearbeitet. Aus dieser Mischung wurden entsprechend der Arbeitsweise von Beispiel 18 Formkörper hergestellt, welche bei 120˚C getrocknet wurden. Diese getrockneten Formkörper wurden dann für 10 sec in einer 30 %igen Lösung von Aluminiumhydroxidchlorid eingetaucht und erneut bei 120˚C getrocknet.

Beispiel 24

2,1 kg des in Beispiel 18 verwendeten Eisenerzes mit einer Körnung von 0 - 0,09 mm und 0,75 kg desselben Eisenerzes mit einer Körnung von 0,09 - 0,2 mm, 0,03 kg Bindeton und 0,12 g Talkum sowie 0,09 kg eines Celluloseethers, der als organisches Bindemittel und als Plastifizierungsmittel diente, sowie 0,015 kg eines pulverförmigen Phenol-Novolakes mit ca. 9 % Hexamethylentetramin und 450 ml Wasser wurden in einem Knetmischer zu einer plastischen Masse homogen vermischt. Durch Auswalzen wurden Formkörper mit den Abmessungen 150 x 150 x 2,4 mm und durch Strangpressen Formkörper mit den Abmessungen 50 x 50 x 500 mm mit wabenförmigem Querschnitt hergestellt. Die Formkörper wurden 24 Stunden an der Luft vorgetrocknet, anschließend 24 Stunden bei 110˚C zur Entfernung des Wassers und 0,5 h bei 180˚C zum Aushärten des organischen Bindemittels gehalten.

Beispiel 25

1,5 kg des in Beispiel 18 verwendeten Eisenerzes mit einer Körnung von 0 - 0,09 mm und 0,75 kg desselben Eisenerzes mit einer Körnung von 0,09 - 0,2 mm, 0,6 kg des in Beispiel 1 verwendeten Chromerzes mit einer Körnung von 0 - 0,09 mm, 0,03 kg Bindeton, 0,12 kg Talkum, 0,15 kg Vanadiumpentoxid, 0,06 kg Aluminiumhydroxid, 0,09 kg eines Celluloseethers und 0,15 kg eines modifizierten Furanharzes mit Furfurylalkohol und 9 g Hexamethylentetramin sowie 400 ml Waser wurden in einem Knetmischer zu einer plastischen Masse homogen vermischt. Die Verarbeitung der Masse und die Trocknung der Formkörper erfolgte nach der Arbeitsweise von Beispiel 24.

Beispiel 26

1,2 kg des in Beispiel 18 verwendeten Eisenerzes mit einer Körnung von 0 - 0,09 mm und 0,75 kg desselben Eisenerzes mit einer Körnung von 0,09 - 0,2 mm, 0,9 kg Manganerz mit 30 % $MnO_2$, Rest $Fe_2O_3$, $Al_2O_3$, $SiO_2$, CaO und einer Gesamtporosität größer 30 Vol.-% mit einer Korngröße 0 - 0,09 mm, 0,03 kg Bindeton, 0,12 kg Talkum, 0,09 kg eines Celluloseethers und 0,015 kg eines pulverförmigen Phenol-Novolakes mit ca. 9 % Hexamethylentetramin und 450 ml Wasser wurden in einem Knetmischer zu einer plastischen Masse homogen vermischt. Die Verarbeitung der Masse und die Trocknung der Formkörper erfolgte nach der Arbeitsweise von Beispiel 24.

Beispiel 27

Der in Beispiel 18 hergestellte Katalysatorformkörper wurde in einem Säurebad der folgenden Zusammensetzung während 15 Sekunden durch Eintauchen getränkt, anschließend wurde der Formkörper 2 h bei 200˚C getrocknet und dann mit einer Aufheizgeschwindigkeit von 10˚C/h auf 450˚C für die Temperbehandlung erhitzt. Nach einer Haltezeit von 5 h wurde der Formkörper auf Umgebungstemperatur ausgekühlt und ergab einen feuchtigkeitsbeständigen Katalysator guter Aktivität. Die Temperbehandlung erfolgt in einer Atmosphäre mit 5 Vol.-% $O_2$.

9

Beispiele 28 bis 35

Die Arbeitsweise von Beispiel 27 wurde wiederholt, wobei die dort beschriebene Säure verwendet wurde, welche die in der folgenden Tabelle aufgeführten Zusätze enthielt:

Tabelle

Bsp.

28 Säure von Bsp. 27 + 4,0 % Eisen(II)-sulfat-heptahydrat

29 Säure von Bsp. 27 + 4,0 % Eisen(III)-sulfat

30 Säure von Bsp. 27 + 5,0 % Vanadium(IV)oxysulfat-pentahydrat

31 Säure von Bsp. 27 + 0,1 % Nickeloxid

32 Säure von Bsp. 27 + 0,1 % Molybdän(VI)-oxid

33 Säure von Bsp. 27 + 4,0 % Aluminiumsulfathydrat

34 Säure von Bsp. 27 + 0,5 % Mangan(II)-sulfat-monohydrat

35 Säure von Bsp. 27 + 1,0 % Eisenpulver.

Die in den Beispielen hergestellten Katalysatoren wiesen eine gute Feuchtigkeitsbeständigkeit und gute Aktivität bei der Reduzierung von Stickoxiden in Abgasen unter Zusatz von Ammoniak auf.

Die Feuchtigkeitsbeständigkeit der fertigen Katalysatorformkörper kann dadurch festgestellt werden, daß die Katalysatorformkörper in ein Gefäß mit Wasser eingesetzt werden. Ein feuchtigkeitsbeständiger Formkörper bleibt für mindestens 24 Stunden formstabil und behält weitestgehend seine Festigkeit bei. Ein nichtfeuchtigkeitsbeständiger Formkörper zerfällt in dem Wasser in weniger als 24 Stunden.

**Ansprüche**

1. Verfahren zur Herstellung von Katalysatoren für die Reduzierung von Stickoxiden in Abgasen oder für chemische Luftreinigungsverfahren, bei welchem man aus Eisenoxid oder Gemischen aus Eisenoxid und Chromoxid und/oder Manganoxid, die auf Korngrößen < 2 mm zerkleinert sind, unter Verwendung von anorganischen Bindemitteln und Schwefelsäure sowie gegebenenfalls aktivierenden Zusätzen Katalysatorformkörper herstellt, dadurch gekennzeichnet, daß man:

a) entweder die Mischung der festen Ausgangsmaterialien mit Schwefelsäure, einer Mischung aus Schwefelsäure und Phosphorsäure oder einer Sulfate, Hydrogensulfate, Phosphate oder Hydrogenphosphate von Ammonium, Aluminium, Eisen, Vanadium, Mangan, Molybdän, Chrom. Kupfer, Kobalt enthaltenden Schwefelsäuren oder Mischung aus Schwefelsäure und Phosphorsäure versetzt und hieraus Formkörper formt oder de Mischung der festen Ausgangsmaterialien unter Zusatz von Flüssigkeit und/oder Phosphorsäure und/oder Phosphaten zu Formkörpern formt und diese mit Schwefelsäure oder eine Sulfate oder Hydrogensulfate von Ammonium, Aluminium, Eisen, Vanadium, Mangan, Molybdän, Chrom, Kupfer, Kobalt enthaltenden Schwefelsäure behandelt, und

b) abschließend an den in Stufe a) erhaltenden Formkörpern eine Trocknungsbehandlung bei 110° bis 250° C und ein Temperbehandlung bei 250° bis 600° C durchführt.

2. Verfahren nach Anspruch 1, dadurch gekennzeichnet, daß man 10 bis 100 Gew.-% des Eisenoxids oder des Gemisches aus Eisenoxid und Chromoxid und/oder Manganoxid mit einer Korngröße unterhalb 0,09 mm verwendet.

3. Verfahren nach Anspruch 1 oder 2, dadurch gekennzeichnet, daß man die aktivierenden Zusätze mit einer Korngröße unterhalb 0,09 mm verwendet.

4. Verfahren nach einem der vorhergehenden Ansprüche, dadurch gekennzeichnet, daß man statt oder zusammen mit den anorganischen Bindemitteln organische Bindemittel verwendet.

5. Verfahren nach Anspruch 4,
dadurch gekennzeichnet,
daß man als organische Bindemittel Pulverharze, Schmelzkleber, Sinterpulver, Furanharze, modifizierte Furfurylalkoholharze oder Phenol-Formaldehydharze verwendet.

6. Verfahren nach einem der vorhergehenden Ansprüche,
dadurch gekennzeichnet,
daß man als anorganische Bindemittel Ton, Kaolin, Al-haltige Verbindungen, wie Aluminiumhydroxid oder Aluminiumoxychlorid und/oder magnesium- oder calciumhaltige Verbindungen, wie Zemente, gegebenenfalls mit feinkörnigem $SiO_2$ oder ein Gemisch hiervon, verwendet.

7. Verfahren nach Anspruch 6,
dadurch gekennzeichnet,
daß man als die Bindemittelwirkung erhöhende Zusatzstoffe Olivin, Talkum, Metallhydroxide oder Carbonate oder Hydrogencarbonate von Mg, Al, Fe, Ca und gegebenenfalls feinteiliger $SiO_2$ verwendet.

8. Verfahren nach einem der vorhergehenden Ansprüche,
dadurch gekennzeichnet,
daß man als Ton einen Ton mit einem Gehalt von größer als 30 Gew.-% Illit verwendet.

9. Verfahren nach einem der vorhergehenden Ansprüche,
dadurch gekennzeichnet,
daß man 20 bis 70 Gew.-% des Eisenoxids oder des Gemisches aus Eisenoxid und Chromoxid ·und/oder Manganoxid mit einer Korngröße unterhalb 0,09 mm verwendet.

10. Verfahren nach einem der vorhergehenden Ansprüche,
dadurch gekennzeichnet,
daß man das Eisenoxid oder die Gemische aus Eisenoxid und Chromoxid und/oder Manganoxid mit einer Korngröße unterhalb 0,2 mm und vorzugsweise unterhalb 0,09 mm, und die verwendeten aktivierenden Zusätze sowie gegebenenfalls die festen Bindemittel vor dem Vermischen mit den übrigen Bestandteilen der Mischung homogen miteinander vermischt.

11. Verfahren nach einem der vorhergehenden Ansprüche,
dadurch gekennzeichnet,
daß man die aktivierenden Zusätze und die festen Bindemittel mit einer maximalen Korngröße von 0,02 mm verwendet.

12. Verfahren nach einem der vorhergehenden Ansprüche,
dadurch gekennzeichnet,
daß man die Säuren oder Salze in solchen Mengen verwendet, daß das Verhältnis von $SO_4^{-2}$ zu $PO_4^{-3}$ bzw. $HSO_4^-$ zu $HPO_4^{-2}$ oder $HSO_4^-$ zu $H_2PO_4^-$ im Bereich von 100 : 1 bis 1 : 100 liegt.

13. Verfahren nach Anspruch 11,
dadurch gekennzeichnet,
daß das Verhältnis im Bereich von 10 : 1 bis 1 : 10 liegt.

14. Verfahren nach einem der vorhergehenden Ansprüche,
dadurch gekennzeichnet,
daß die Temperaturbehandlung zunächst bei 110 ° C bis 250 ° C als Trocknungsbehandlung und nach dem Trocknen bei 250 ° C bis 600 ° C als Temperbehandlung durchgeführt wird.

15. Verfahren nach Anspruch 13,
dadurch gekennzeichnet,
daß die Temperbehandlung bei einer Maximaltemperatur zwischen 350 ° C und 450 ° C durchgeführt wird.

16. Verfahren nach Anspruch 13 oder 14,
dadurch gekennzeichnet,
daß eine Aufheizgeschwindigkeit bei der Temperbehandlung zwischen 5 ° C/h und 200 ° C/h eingehalten wird.

17. Verfahren nach einem der vorhergehenden Ansprüche,
dadurch gekennzeichnet,
daß man die Temperbehandlung in einer Atmosphäre mit reduziertem $O_2$-Gehalt, insbesondere mit 0,5 - 10 Vol.-% $O_2$, durchführt.

18. Verfahren nach Anspruch 16,
dadurch gekennzeichnet,
daß die Temperatmosphäre einen $O_2$-Gehalt von 2 - 4 Vol.-% aufweist.

19. Verfahren nach einem der vorhergehenden Ansprüche,
dadurch gekennzeichnet,
daß die Formkörper nach ihrer Herstellung und Trocknung und/oder Aushärtung vor der Säurebehandlung mit einer Lösung von Aluminiumhydroxidchlorid getränkt und dann erneut getrocknet werden.

20. Verfahren nach einem der vorhergehenden Ansprüche,
dadurch gekennzeichnet,
daß die Formkörper durch Pressen auf einer Stempelpresse, durch isostatisches Pressen, durch Strangpressen, durch Auswalzen oder durch Gießen hergestellt werden.

21. Katalysator für die Reduzierung von Stickoxiden aus Abgasen oder für chemische Luftreinigungsverfahren, hergestellt nach dem Verfahren nach einem der vorhergehenden Ansprüche.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 218 014 (DIDIER ENGINEERING) <br> * Das ganze Dokument * <br><br> --- | 1,2,9, 14,15, 20,21 | B 01 D 53/36 <br> B 01 J 23/74 |
| A | GB-A-2 026 336 (HITACHI) <br> --- | | |
| A | EP-A-0 229 229 (DIDIER-WERKE) <br> ----- | | |

|  | RECHERCHIERTE SACHGEBIETE (Int. Cl.4) |
|---|---|
|  | B 01 D <br> B 01 J |

Der vorliegende Recherchenbericht wurde für alle Patentansprüche erstellt

| Recherchenort | Abschlußdatum der Recherche | Prüfer |
|---|---|---|
| DEN HAAG | 24-11-1988 | BOGAERTS M.L.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.................................................................
& : Mitglied der gleichen Patentfamilie, übereinstimmendes
    Dokument

EPO FORM 1503 03.82 (P0403)